# EUROPÄISCHE PATENTSCHRIFT

(11) **EP 1 389 669 B1**
(45) Veröffentlichungstag und Bekanntmachung des Hinweises auf die Patenterteilung: **07.06.2006**
(21) Anmeldenummer: 02018487.5
(22) Anmeldetag: 16.08.2002
(51) Int. Cl.: F01D 9/04, F16B 21/04

(54) **Befestigungssystem**
Fastening system
Système de fixation

(43) Veröffentlichungstag der Anmeldung: 18.02.2004
(73) Patentinhaber: SIEMENS AKTIENGESELLSCHAFT, 80333 München (DE)
(72) Erfinder: Tiemann, Peter, 58452 Witten (DE)

(56) Entgegenhaltungen:
- EP-A- 1 143 156
- GB-A- 846 623

## Beschreibung

Die Erfindung betrifft ein Befestigungssystem für ein Bauteil, insbesondere für eine Turbinenleitschaufel, nach dem Oberbegriff des Anspruchs 1.

Die US-PS 5,540,552 zeigt eine Turbinenschaufel, die an zwei Stellen an einer Halterung, nämlich an den Rotor einer Turbine befestigt ist, wobei an einer Stelle eine Bajonettkupplung verwendet wird.

Die US-PS 5,074,752 zeigt eine Turbinenleitschaufel, die an beiden Enden befestigt ist, wobei ein Ende eine Bajonettkupplung aufweist. Die Turbinenleitschaufel kann nicht verdreht werden.

Die US-PS 5,244,345 zeigt, wie eine Sicherungsmatte an einer Scheibe eines Turbinenrotors mittels einer Bajonettkupplung gesichert ist.

Ferner ist eine Bajonettverbindung gemäß dem Oberbegriff des Anspruchs 1 aus der EP 1 143 156 A1 bekannt, die zur Befestigung eines Speichenrades an einem Gehäuse eines Autokühlers eingesetzt wird. Der Bajonettverschluss setzt sich aus einem Kupplungselement und einem Sicherungsbolzen zusammen, wobei das Kupplungselement verdrehsicher mit dem Gehäuse verbunden ist, nachdem das Sicherungselement eingesetzt worden ist.

Es ist Aufgabe der Erfindung, ein Befestigungssystem aufzuzeigen, mittels dessen ein Bauteil schnell, sicher und drehbar an einer Halterung befestigbar ist.

Die Aufgabe wird erfindungsgemäß durch ein Befestigungssystem gemäss Anspruch 1 gelöst.

Weitere vorteilhafte Ausgestaltungen des Befestigungssystems sind in den Unteransprüchen aufgelistet.

Ein Ausführungsbeispiel der Erfindung ist in Zeichnungen vereinfacht dargestellt.

Es zeigen:
Figur 1 ein erfindungsgemäßes Befestigungssystem,
Figur 2 ein Rohrelement eines erfindungsgemäßen Befestigungssystems,
Figur 3 eine Unterseite einer Turbinenschaufel, als ein Bauteil, das durch das ein erfindungsgemäßes Befestigungssystem befestigt ist,
Figur 4 einen Bolzen eines erfindungsgemäßen Befestigungssystems.

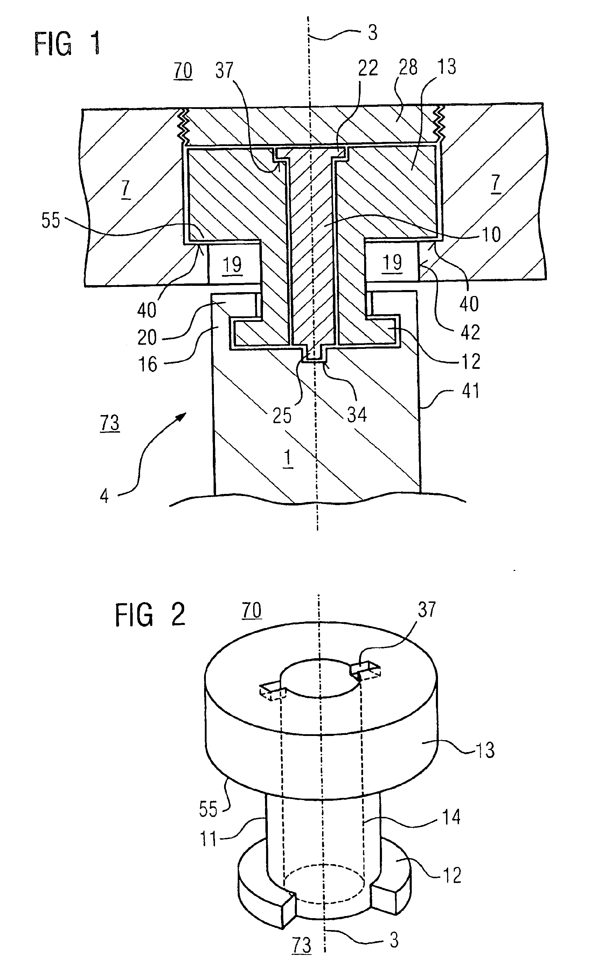

Figur 1 zeigt ein erfindungsgemäßes Befestigungssystem 4 mit einem Bauteil 1, insbesondere einer Turbinenleitschaufel 1, und einer Halterung 7, an der das Bauteil 1 befestigt ist. Das Bauteil 1 ist beispielsweise nur mit dem Befestigungssystem 4 an der Halterung 7 befestigt und erstreckt sich in einer radialen Richtung 3.

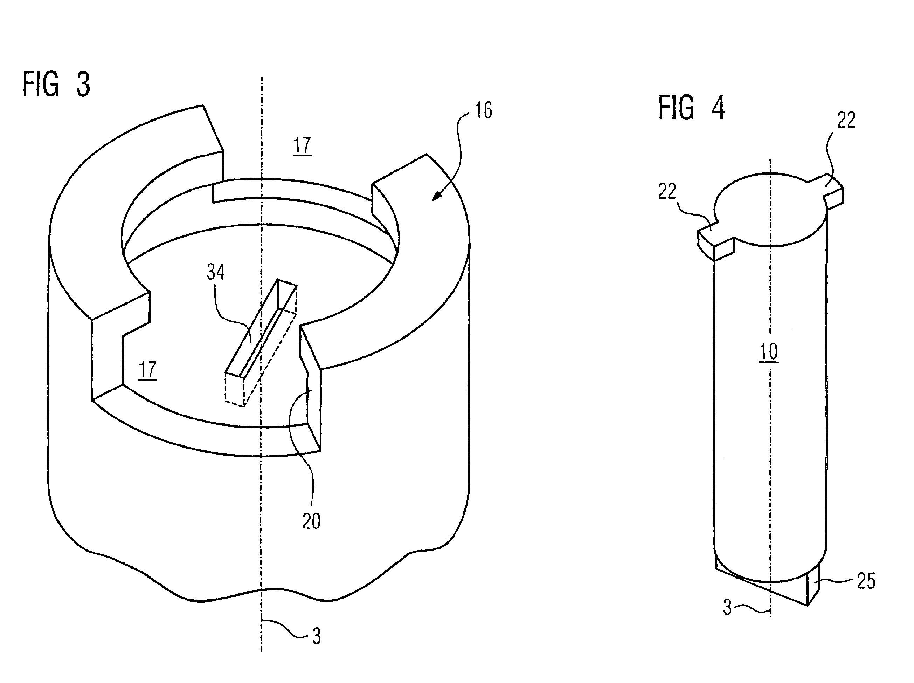

Die Halterung 7 ist bspw. Teil eines Gehäuses, beispielsweise einer Turbine, oder Teil eines Leitschaufelträgers.
Die Halterung 7 weist eine durchgehende Öffnung 19 auf, die sich durchgehend in radialer Richtung 3 von einer Außenseite 70 der Halterung 7 zu einer Innenseite 73 erstreckt und bspw. im Querschnitt senkrecht zur Achse 3 kreisförmig ausgebildet ist.
In der durchgehenden Öffnung 19 ist ein Zwischenstück 13, bspw. ein Rohrelement 13, und in dem Rohrelement 13 ein Bolzen 10 angeordnet.
Das Bauteil 1 ist mittels eines Bajonettverschlusses an dem Rohrelement 13 (Fig. 2, 3) befestigt. Das Rohrelement 13 dient zur Halterung der Turbinenleitschaufel 1 in radialer Richtung 3.
Der Bolzen 10 mit seinen Formelementen, einem Bolzenvorsprung 22 und einer Bolzennase 25, dient als Verdrehsicherung des Bauteils 1 gegenüber dem Rohrelement 13.
Ein Haltedeckel 28, bspw. eine Schraube 28, an der Außenseite 70 verhindert, dass sowohl der Bolzen 10 als auch das Rohrelement 13 sich aus der durchgehenden Öffnung 19 bewegen können.
Das Rohrelement 13 liegt mit seinem Haltekragen 55 beispielweise innerhalb der durchgehenden Öffnung 19 an einem Auflagerabsatz 40 auf. Weitere Befestigungsmöglichkeiten des Rohrelements 13 an der Halterung 7 sind denkbar.

Die Turbinenleitschaufel 1 kann bspw. von der Außenseite 70 her komplett durch die durchgehende Öffnung 19 hindurchgeschoben werden, d. h. eine maximale Querschnittsfläche 41 des Bauteils 1 passt in ihrer Form durch eine minimale Querschnittsfläche 42 der durchgehenden Öffnung 19.
In radialer Richtung 3 gesehen verengt sich die durchgehende Öffnung 19 dort, wo der Auflagerabsatz 40 vorhanden ist.

Figur 2 zeigt das Rohrelement 13 der Figur 1.
Innerhalb des Rohrelementes 13 ist ein Innenraum 14 vorhanden, der sich durchgehend in radialer Richtung 3 erstreckt und bspw. im Querschnitt senkrecht zur Richtung 3 kreisförmig ausgebildet ist.
Innerhalb des Innenraums 14 ist der Bolzen 10 (Fig. 4) angeordnet.
Der Bolzen 10 kommt mit seinem zumindest einen Bolzenvorsprung 22 (Fig. 4) in einem zum Formelement 22 korrespondierenden Formelement 37, bspw. einer Aufnahme 37, innerhalb des Innenraums 14 in der Nähe zur Aussenseite 70 zum formschlüssigen Anliegen, so dass der Bolzen 10 gegenüber dem Rohrelement 13 nicht verdreht werden kann. Die Aufnahme 37 ist bspw. eine Einkerbung an einer Innenfläche des Innenraums 14.
Das Rohrelement 13 weist daher bspw. im Bereich der Aussenseite 70 einen grösseren Innendurchmesser auf als im tiefer gelegenen Bereich der Aufnahme 37.
In radialer Richtung 3 zum Innenraum 73 der Turbine hin gesehen ist eine Einschnürung 11 in den äußeren Abmessungen, beispielsweise im Durchmesser, des Rohrelements 13 vorhanden, so dass dort der Haltekragen 55 ausgebildet ist.

An seinem radialen Ende ist dann wiederum teilweise eine Erweiterung 12 vorhanden, die sich in Umfangsrichtung um das Rohrelement 13 erstreckt. Die Erweiterung 12 ist ringsegmentförmig an dem Rohrelement 13 ausgebildet und stellt die eine von zwei Kupplungsseiten eines Befestigungssystems 4 (Fig. 1) dar.
Die Erweiterungen 12 sind so ausgebildet, dass die L-förmigen Absätze 20 (Fig. 3) des Bauteils 1 sie umgreifen können.

Figur 3 zeigt die Unterseite des Bauteiles 1 (z.B. Turbinenschaufel), an der die zweite Kupplungsseite 16 des Befestigungssystems 4 ausgebildet ist.
An der Unterseite des Bauteils 1, das an der Halterung 7 anliegt, ist ein zum Formelement 25 korrespondierendes Formelement 34, bspw. eine Ausnehmung 34, vorhanden, in die die entsprechend ausgeformte Bolzenmasse 25 (Figur 4) formschlüssig derartig eingreift, so dass die Bolzennase 25 sich nicht in der Aufnahme 34 verdrehen lässt.
In Umfangsrichtung um die radiale Achse 3 gesehen sind an der Unterseite des Bauteils 1 L-förmige Absätze 20 ausgebildet. Die L-förmigen Absätze 20 weisen zumindest eine Durchführung 17 auf, in die die Erweiterungen 12 des Rohrelements 13 hineinpassen. Die L-förmigen Absätze 20 sind so ausgebildet, dass sich das Bauteil 1 so drehen lässt, dass die Erweiterungen 12 bajonettartig innerhalb der L-förmigen Absätze 20 anordnen lassen. Nach entsprechender Drehung der Turbinenschaufel 1 wird diese in radialer Richtung 3 durch die L-förmigen Absätze 20 und die Erweiterungen 12 gehalten.

Figur 4 zeigt den Bolzen 10, der sowohl an dem Rohrelement 13 und dem Bauteil 1 anliegt und zur Verdrehsicherung von Bauteil 1 und Rohrelement 13 dient.

Das Rohrelement 13 ist beispielsweise Teil einer Verstelleinrichtung, d. h. das Rohrelement 13 kann um seine in radialer Richtung 3 stehende Längsachse gedreht werden, so dass sich das Bauteil 1 in gleicher Weise mit verdrehen lässt, um das Bauteil 1, bspw. die Turbinenleitschaufel 1, gegenüber einem strömenden Medium in einer Gasturbine zu verstellen.
Ebenso ist es aber auch möglich, dass das Rohrelement 13 verdrehsicher innerhalb der Halterung 7 angeordnet ist.

Der Zusammenbau von der Turbinenschaufel 1 und der Halterung 7 mit dem Befestigungssystem 4 erfolgt bspw. wie folgt.
Das Bauteil 1 wird von aussen 70 durch oder von innen 73 in die durchgehende Öffnung 19 geschoben. Dann wird das Rohrelement 13 ebenfalls in die durchgehende Öffnung 19 geschoben, bis es mit dem Haltekragen 55 an dem Auflagerabsatz 40 anliegt, und dann mit dem Bauteil 1 verbunden.
Danach wird der Bolzen 10 in das Rohrelement 13 eingeführt, so dass die Bolzennase 25 in der Aufnahme 34 des Bauteils 1 und der Bolzenvorsprung 22 in der Vertiefung 37 des Rohrelements 13 einliegt. Die Elemente (1, 10, 13) können aber auch bereits vor Einschub durch oder in die durchgehenden Öffnung 19 zusammengebaut worden sein. Abschliessend wird die Schraube 28 montiert.

## Patentansprüche

1. Bauteil (1), insbesondere eine Turbinenschaufel, und Halterung (7) mit einem Befestigungssystem (4) zur Befestigung des Bauteils (1) an der Halterung (7),
wobei das Bauteil (1) mittels einer zwei miteinander korrespondierende Kupplungsteile aufweisenden Bajonettkupplung gehalten wird, von denen eines an dem Bauteil (1) ausgebildet ist,
wobei das Befestigungssystem (4) ein Zwischenstück (13), an dem das andere Kupplungsteil (12) ausgebildet ist, und eine Verdrehsicherung umfasst, die das
Zwischenstück (13) und das Bauteil (1) bei geschlossener Bajonettkupplung drehfest miteinander verbindet,
**dadurch gekennzeichnet,**
**dass** das Zwischenstück (13) seinerseits in der Halterung (7) drehbar und lösbar gehalten wird.

2. Vorrichtung nach Anspruch 1,
**dadurch gekennzeichnet, dass**
das Zwischenstück (13) als Formkörper mit einer durchgehenden Öffnung (19) ausgebildet ist, in die als Verdrehsicherung ein Bolzen (10) einführbar ist, der mit Formelementen versehen (22, 25) ist,
die in korrespondierende Formelemente (34, 37) des Zwischenstücks (13) und des Bauteils (1) formschlüssig eingreifen.

3. Vorrichtung nach Anspruch 2,
**dadurch gekennzeichnet, dass** der Bolzen (10) mit einer Bolzennase (25) in einer Aufnahme (34) des Bauteils (1) formschlüssig eingreift.

4. Vorrichtung nach Anspruch 2,
**dadurch gekennzeichnet, dass** der Bolzen (10) mit einem Bolzenvorsprung (22) in eine Vertiefung (37) des Zwischenstücks (13) eingreift.

5. Vorrichtung nach einem der Ansprüche 1 - 4,
**dadurch gekennzeichnet,**
**dass** das Zwischenstück (13) zur Ausbildung eines äußeren Haltekragens (55) im Querschnitt eine Einschnürung (11) aufweist,
**dass** in der Halterung (7) eine durchgehende Öffnung (19) vorgesehen ist,
die zur Ausbildung eines Auflagerabsatzes (40) eine Querschnittsverringerung aufweist, und
**dass** das Zwischenstück (13) mit seinem Haltekragen (55) auf dem Auflagerabsatz (40) aufliegt.

6. Vorrichtung nach Anspruch 5,
**dadurch gekennzeichnet, dass**
das Zwischenstück (13) durch einen Haltedeckel (28), insbesondere einem eingeschraubten Haltedeckel (28), in der durchgehenden Öffnung (19) der Halterung (7) gehalten wird.

## Claims

1. Component (1), in particular a turbines blade, and holder (7) having a fastening system (4) for fastening the component (1) to the holder (7), the component (1) being held by means of a bayonet coupling which has two coupling parts which correspond with one another and of which one is formed on the component (1), the fastening system (4) comprising an intermediate piece (13), on which the other coupling part (12) is formed, and an anti-rotation locking means, which connects the intermediate piece (13) and the component (1) to one another in a rotationally fixed manner when the bayonet coupling is closed,
**characterized in that** the intermediate piece (13) is in turn rotatably and releasably held in the holder (7).

2. Device according to Claim 1, **characterized in that** the intermediate piece (13) is designed as a shaped body having a continuous opening (19), into which a bolt (10) can be inserted as anti-rotation locking means, this bolt (10) being provided with shaped elements (22, 25) which engage in a positive-locking manner in corresponding shaped elements (34, 37) of the intermediate piece (13) and of the component (1).

3. Device according to Claim 2, **characterized in that** the bolt (10), with a bolt lug (25), engages in a receptacle (34) of the component (1) in a positive-locking manner.

4. Device according to Claim 2, **characterized in that** the bolt (10), with a bolt projection (22), engages in a recess (37) of the intermediate piece (13).

5. Device according to one of Claims 1 to 4, **characterized in that** the intermediate piece (13) has a constriction (11) in cross section for forming an outer retaining collar (55), **in that** a continuous opening (19) is provided in the holder (7), this continuous opening (19) having a cross-sectional reduction for forming a support step (40), and **in that** the intermediate piece (13) rests with its retaining collar (55) on the support step (40).

6. Device according to Claim 5, **characterized in that** the intermediate piece (13) is held in the continuous opening (19) of the holder (7) by a retaining cap (28), in particular a screwed-in retaining cap (28).

## Revendications

1. Elément (1), notamment aube de turbine, et fixation (7) ayant un système (4) de fixation de l'élément (1) à la fixation (7), l'élément (1) étant maintenu au moyen d'un accouplement à baïonnette ayant deux parties d'accouplement qui se correspondent entre elles, dont l'une est constituée sur l'élément (1),
le système (4) de fixation comprenant une pièce (13) intermédiaire sur laquelle est constituée l'autre partie (12) de l'accouplement et un blocage en torsion qui rend solidaire en rotation la pièce (13) intermédiaire et l'élément (1) lorsque l'accouplement de baïonnette est fermé,
**caractérisé en ce que** la pièce (7) intermédiaire est, pour sa part, maintenue tournante et amovible dans la fixation (7).

2. Dispositif suivant la revendication 1,
**caractérisé en ce que** la pièce (13) intermédiaire est constituée sous la forme d'une pièce façonnée ayant une ouverture (19) traversante, dans laquelle peut être introduit, en tant que blocage en torsion, l'axe (10) qui est muni d'éléments (22, 25) de forme, lesquels pénètrent à complémentarité de formes dans des éléments (24, 37) de forme correspondante de la pièce (13) intermédiaire et de l'élément (1).

3. Dispositif suivant la revendication 2,
**caractérisé en ce que** l'axe (10) pénètre à complémentarité de formes par un bec (25) d'axe dans un logement (34) de l'élément (1).

4. Dispositif suivant la revendication 2,
**caractérisé en ce que** l'axe (10) pénètre par une saillie (22) d'axe dans une cavité (37) de la pièce (13) intermédiaire.

5. Dispositif suivant l'une des revendications 1 à 4,
**caractérisé en ce que** la pièce (13) intermédiaire a, pour constituer un collet (55) extérieur de maintien, en section transversale un rétrécissement (11),
**en ce qu'**il est prévu dans la fixation (7) une ouverture (19) traversante,
qui a, pour constituer un épaulement (40) d'appui, une diminution de section transversale, et
**en ce que** la pièce (13) intermédiaire s'applique par son collet (55) de maintien sur l'épaulement (40) d'appui.

6. Dispositif suivant la revendication 5,
**caractérisé en ce que** la pièce (13) intermédiaire est maintenue par un couvercle (28) de maintien, notamment un couvercle (28) de maintient boulonné dans l'ouverture (19) traversante de la fixation (7).
